# EUROPÄISCHE PATENTSCHRIFT

(11) **EP 1 402 955 B1**
(45) Veröffentlichungstag und Bekanntmachung des Hinweises auf die Patenterteilung: **16.05.2007**
(21) Anmeldenummer: 02021438.3
(22) Anmeldetag: 25.09.2002
(51) Int. Cl.: B04B 11/04

(54) **Selbstentleerender Separator mit einer Feststoffauffangvorrichtung und Verfahren zum Betrieb des Separators**
Auto-discharging separator with collecting device and method for operating the separator
Séparateur avec vidage automatique des particules solides dans un container et procédé d'operation d'un tel separateur

(43) Veröffentlichungstag der Anmeldung: 31.03.2004
(73) Patentinhaber: Westfalia Separator AG, 59302 Oelde (DE)
(72) Erfinder: Zettier, Karl-Heinz, 59302 Oelde (DE); Höcker, Joachim, 59302 Oelde (DE); Bähner, Ludger, 59302 Oelde (DE)
(74) Vertreter: Specht, Peter

(56) Entgegenhaltungen:
- WO-A-03/007700
- DE-A- 3 536 624
- DE-A- 3 841 634
- DE-A- 4 104 482
- DE-C- 4 002 073

## Beschreibung

Die Erfindung betrifft einen selbstentleerenden Separator mit einer Feststoffauffangvorrichtung nach dem Oberbegriff des Anspruches 1 und ein Verfahren zum Betrieb eines selbstentleerenden Separators mit einer Feststoffauffangvorrichtung.

Eine Feststoffauffangvorrichtung ist aus dem Prospekt "Feststoffauffangbehälter für Milchseparatoren", 9910-8024-240, der Westfalia Separator Food Tec GmbH, Oelde, Deutschland bekannt.

Der in dieser Schrift gezeigte Feststoffauffangbehälter der Feststoffauffangvorrichtung dient zum Auffangen der Feststoffphase bei Entleerungen von selbstentleerenden Separatoren, insbesondere Milchseparatoren, und ermöglicht einerseits den Abbau der hohen kinetischen Energie der aus dem Separator entleerten Produktphase und dient andererseits als Pufferbehälter für eine nachgeschaltete Feststoffpumpe.

Der Feststoffauffangbehälter wird i.allg. direkt unter den Feststoffablauf des Separators angeordnet und kann mit einer oder mehreren Stabsonden versehen werden, mit welchen der Flüssigkeitsspiegel in dem Feststoffauffangbehälter messbar ist.

Je nach Separatortyp wird ein mehr oder weniger großer Feststoffauffangbehälter direkt hinter dem Feststoffänger des Separators installiert, wobei aber das Volumen deutlich größer - z.B. 2 - 3mal so groß - wie das Entleerungsvolumen des Separators ist.

Die Füllhöhe wird über eine oder mehrere Niveausonden erfasst und zur Regelung einer Ablaufpumpe genutzt.

Die Feststoffauffangbehälter sind mit Entlüftungsrohren versehen. Diese sind im Zentrum angebracht und dienen dazu, den Luftstoß bei Entleerungsvorgängen abzuleiten. Der Durchmesser ist der Maschinen- und Behältergröße angepasst. Auch als Überlaufsicherung wird das Entlüftungsrohr genutzt, so daß sich z.B. bei Pumpenausfall das Produkt nicht bis in den Separator zurückstauen kann.

Je nach Produkt und Größe des Feststoffauffangbehälters ist es schwierig, die Entlüftungsrohre und den Behälter sauber zu halten. Um eine einwandfreie Sauberkeit an allen Stellen zu gewährleisten, ist es daher oft notwendig, eine oder mehrere Sprühkugeln zu installieren.

Die Feststoffauffangbehälter haben sich also an sich bewährt, bringen aber u.a. den Nachteil relativ hoher Kosten und eines großen Raumbedarfes aufgrund ihrer relativ großvolumigen Bemessung und eines relativ hohen Reinigungsaufwandes mit sich.

Die DE 35 36 624 A1 zeigt einen gattungsgemäßen Separator. Dem Feststoffänger ist ein Umwälzkreislauf zugeordnet, mit dem die Konsistenz des Feststoffes in Feststoffauffangbehälter bestimmbar ist.

Die DE 38 41 634 A1 offenbart ein Verfahren zum feststoffabhängigen Öffnen der Trommel eines Separators, bei dem der Feststoffauswurf von dem Feststoffansatz in der Trommel abhängig ist.

Die DE 41 004 482 zeigt eine Vollmantel-Schneckenzentrifuge zur Trennung von Feststoff-Flüssigkeitsgemischen, insbesondere zur Eindickung von Dünnschlamm, wobei der Austrag sämtlicher Produktphasen kontinuierlich erfolgt. Bei dem Austrag wird insbesondere die Fließgeschwindigkeit der abgeleiteten fließfähigen Feststoffphase ermittelt. Ist deren Fließfähigkeit zu dünn, wird der ausgetragenen Feststoffphase direkt ein Teil Dünnschlamm aus dem Produktzulauf der Zentrifuge zugesetzt.

Die Erfindung hat vor diesem Hintergrund die Aufgabe, einen selbstentleerenden Separator mit einer Feststoffauffangvorrichtung zu schaffen, der günstig herzustellen und leicht zu reinigen ist und auf einfache Weise auch zur Überwachung des Separators nutzbar ist.

Die Erfindung löst diese Aufgabe durch den Gegenstand des Anspruchs 1 und den Gegenstand des Anspruchs 18. Sie ist für die Verarbeitung von Produkten geeignet, bei welchen der Feststoff noch fließfähig ist.

Da in dem Behälterzulauf eine Messeinrichtung zur Sensierung einer den Behälterzulauf durchtretenden, noch fließfähigen bzw. sogar flüssigen Feststoffphase - z.B. eine relativ zum Schleudergut schwere Partikel enthaltende Phase aus Feststoffpartikeln vom Separator angeordnet ist, kann der Durchtritt dieser Flüssigkeit vom Separator überwacht werden. Damit kann einerseits der Feststoffauffangbehälter kleiner ausgelegt und damit leichter gereinigt werden. Andererseits können auch auf einfache Weise ergänzende Überwachungsfunktionen realisiert werden.

Vorzugsweise beträgt das Volumen des Feststoffauffangbehälters weniger als das 2fache des Volumens des Volumens der Separatortrommel. Insbesondere entsprichtes dem 0,8 - 1,2fachen Volumen. Besonders bevorzugt entspricht das Volumen des Feststoffauffangbehälters dem Volumen der Separatortrommel. Es sind also sehr kleine und damit kostengünstige Feststoffauffangbehälter einsetzbar.

Vorzugsweise ist der Separator oberhalb des Feststoffauffangbehälters angeordnet und/oder die Behälterzuleitung an einen Feststoffänger direkt angeschlossen. Ergänzend kann auch ein Kompensator zum Ausgleich der Schwingbewegungen des Separators bzw. zur Entkopplung zwischengeordnet werden.

Vorzugsweise mündet der Behälterzulauf in den oberen Bereich des Feststoffauffangbehälters, insbesondere in das obere Drittel, vorzugsweise tangential, so daß die kinetische Energie besonders gut beim Kreisen des Feststoffes im Behälter nach und nach abgebaut wird.

Nach weiterer Ausgestaltung entspricht ferner der Behälterdurchmesser der Höhe des Behälters. Bevorzugt ist die Höhe mindestens das 0,5fache und höchstens das 2fache des Durchmessers. Diese Auslegungen haben sich besonders bewährt.

Bei dem erfindungsgemäßen Verfahren kann anhand der von der Messeinrichtung abgegebenen Signale die Funktion des Separators von einem Steuerungsrechner überwacht und es können Betriebs- oder Störfunktionen ausgelöst werden.

So ist es auf einfache Weise möglich, die eingestellte Zeit zwischen den Entleerungen zu überwachen und/oder es kann anhand der Messeinrichtung der Zeitpunkt des Beginns, die Dauer und/oder das Volumen der Entleerung bestimmt werden und dass bei Abweichungen von Sollwerten eine Warn- und/oder Störfunktion ausgelöst werden.

Bei der Bestimmung der Dauer der Entleerung wird insbesondere auch die Dauer des Leerlaufens der Messeinrichtung berücksichtigt. Diese ist von der Gesamtzeitdauer des Ansprechens der Messeinrichtung abzuziehen, um die Entleerungszeit zu ermitteln.

Ergänzend ist es sinnvoll, wenn bei der Auslösung von Betriebs- oder Störfunktionen die Zeitverzögerung zwischen dem Ansprechen der Messeinrichtung und - vorzugsweise - dem Erreichen des Ventils des Entlüftungs-/Abwasserpfades berücksichtigt wird. Diese liegt - je nach Maschinentyp - bei weniger als 0, 5 sec, zwischen 0, 5 und 2, insbesondere zwischen 0,5 und 1 sec. Bei einem Entleerungsvorgang verlässt die Feststoffphase den Separator mit hoher Geschwindigkeit und erzeugt einen Druckstoß. Luft wird mitgerissen und vor der Phase hergedrückt und kann durch die verzögerte Schaltung ohne Produktverlust abgeleitet werden, denn die Luft kann zunächst abgeleitet werden bevor das Produkt das Ventil vor dem Gully erreicht.

Weitere vorteilhafte Ausgestaltungen der Erfindung sind den übrigen Unteransprüchen zu entnehmen.

Nachfolgend werden Ausführungsbeispiele anhand der Zeichnung näher beschrieben, wobei auch weitere Vorteile der Erfindung deutlich werden. Es zeigt:
- Fig. 1: eine Feststoffauffangvorrichtung; und
- Fig. 2, 3: eine Messeinrichtung für die Feststoffauffangvorrichtung der Fig. 1 in zwei verschiedenen Ansichten.

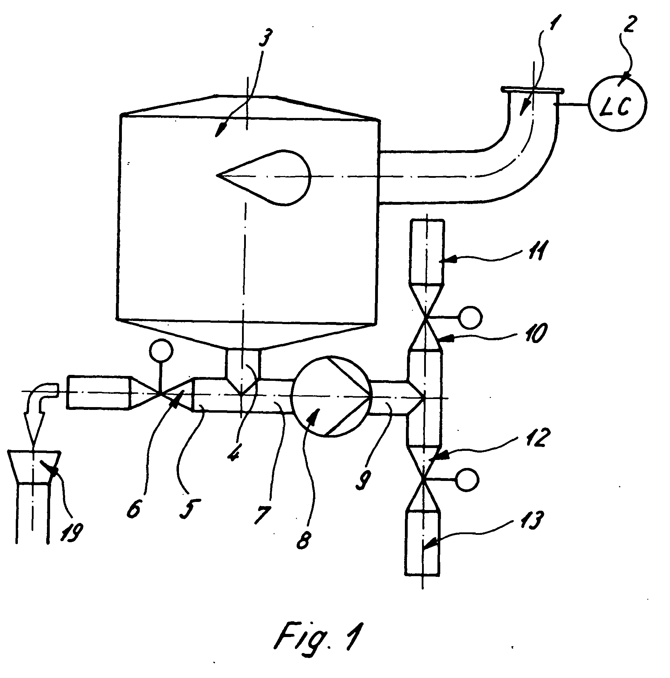

Fig. 1 zeigt eine Feststoffauffangvorrichtung, welche einen tangentialen Behälterzulauf 1 aufweist, der dem Feststofffänger eines hier nicht dargestellten Separators - z.B. ein Milchseparator - nachgeschaltet ist, welcher vorzugsweise oberhalb des Feststoffbehälters 3 angeordnet ist.

Die Größe des hier im wesentlichen zylindrischen Feststoffauffangbehälters 3 ist an das maximale Entleerungsvolumen des Separators während einer Entleerung angepasst und beträgt z.B. in Anpassung an das Ableitungsvolumen 80 1. Die Höhe wird im zylindrischen Bereich gemessen.

Der Feststoffauffangbehälter 3 ist also deutlich kleiner - z.B. mehr als 50 % - als die bekannten Feststoffauffangbehälter nach dem Stand der Technik.

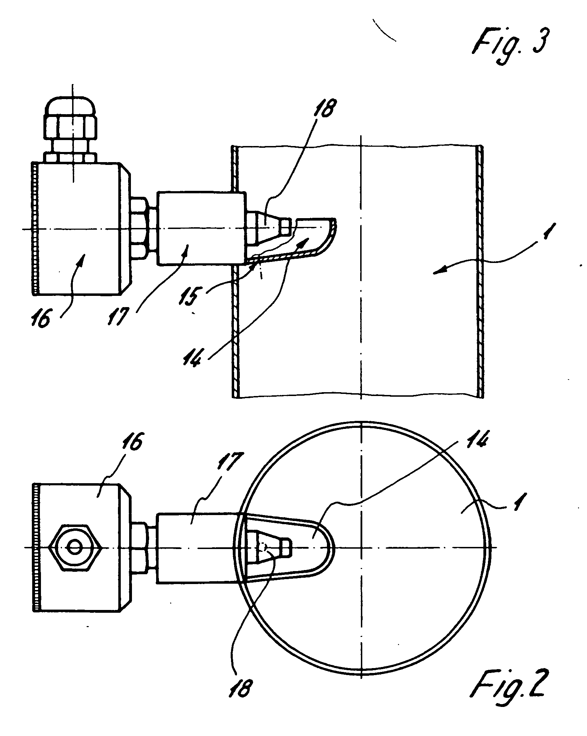

In dem rohrförmigen, z.B. im Querschnitt runden oder eckigen Behälterzulauf 1 ist eine Messeinrichtung 2 angeordnet, welche detaillierter in Fig. 2 und 3 dargestellt ist.

Der Behälterzulauf 1 mündet hier horizontal tangential in den oberen Bereich - hier in das obere Drittel - des Feststoffauffangbehälters 3, der an seiner konisch ausgestalteten Unterseite im Zentrum eine wiederum rohrförmige Behälterableitung 4 aufweist, die sich unterhalb des Feststoffauffangbehälters 3 t-stückartig verzweigt. Ein winkliges (z.B. schräg von oben) tangentiales Einmünden des Behälterzulaufs 1 ist ebenfalls denkbar.

Die Anordnung der Behälterableitung 4 im Zentrum der konisch ausgestalteten Unterseite hat den ganz besonderen Vorteil, daß nur Flüssigkeit mit Feststoffen abgeleitet wird, deren kinetische Energie sich so weit abgebaut hat, dass sie durch das Zentrum der Unterseite abfließen kann. Separate Entlüftungsrohre sind nicht mehr notwendig.

In dem einen Zweig 5 der Behälterableitung 4 ist ein vorzugsweise automatisches Ventil 6 des Entlüftungs-/Abwasserpfades - auch Gullyventil genannt - angeordnet, von dem aus das Produkt in einen Gully 19 leitbar ist.

Im zweiten Zweig 7 der Behälterableitung 4 ist dagegen eine vorzugsweise als selbstansaugende Kreiselpumpe ausgelegte Feststoffpumpe 8 angeordnet, der wiederum eine sich t-stückartig verzweigendes Pumpenableitung 9 nachgeordnet ist.

Die rohrförmige Pumpenableitung 9 erlaubt einerseits über ein Feststoffventil 10 die Ableitung der Produktphase in eine Feststoffableitung 11 und andererseits über ein Produktventil 12 die Ableitung der Produktphase in die Produktrückführung 13 des Separators.

Die Messeinrichtung 2 ist detaillierter in Fig. 2 und 3 dargestellt.

Sie besteht aus einer in den Behälterzulauf 1 ragenden, nach oben hin offenen Auffangschale 14, welche in ihrem unteren Bereich eine Ablaufbohrung 15 aufweist. Die Auffangschale 14 ist dabei in einem sich senkrecht nach unten erstreckenden, vom Behälter abgewandten Bereich des rohrartigen Behälterzulaufs 1 angeordnet.

Eine ebenfalls in den Behälterzulauf 1 - und zwar in einen hier senkrecht nach unten ausgerichteten Rohrteil des Zulaufs - ragende Niveausonde 16 mit einem Sensorkopf 18, der an einer Muffe 17 die Rohrwandung des Behälterzulaufs 1 durchtritt und in die Auffangschale 14 hineinragt, ermöglicht eine Sensierung der die Auffangschale 14 durchströmenden Produktphase (z.B. mittels einer kapazitiven Sonde, welche die Flüssigkeit in der Auffangschale 14 sensiert).

Die Auffangschale 14 erstreckt sich ca. über ein Drittel des Durchmessers des Behälterzulaufs 1 in diesen hinein und überdeckt nur einen geringeren Teil der Querschnittsfläche dieses Rohres.

Die Messeinrichtung 2 muss derart beschaffen sein, dass mit ihr sensierbar ist, ob das Ableitungsrohr 4 eine vom Separator abgeleitete Feststoffphase durchtritt.

Durch die Dimensionierung der Auffangschale 14 und des Durchmessers der Ablaufbohrung 15 ergeben sich immer nahezu gleiche Leerlaufzeiten der Auffangschale 14, wenn diese mit fließfähigen Feststoffen gefüllt wurde.

Wird die Messeinrichtung an eine hier nicht dargestellte Steuerungs- und/oder Regelungseinrichtung des Separators angeschlossen, sind die von ihr abgegebenen Signale zur Steuerung des Separators und der Auffangvorrichtung nutzbar.

Vorzugsweise wird die Feststoffauffangvorrichtung wie folgt betrieben:

Während des Betriebs des Separators wird das Ventil 6 vor einer Feststoffentleerung geöffnet gehalten, um den Separator problemlos entlüften zu können und um im Betrieb sicherzustellen, dass der Feststoffauffangbehälter 3 wirklich leer ist. Das Ventil 6 gewährleistet also eine Entlüftung des Separators sowie einen ständigen Spülwasserablauf.

Beim Einleiten einer Feststoffentleerung wird dagegen das Ventil 6 geschlossen und die Feststoffpumpe 8 gestartet. Die Laufzeit der Feststoffpumpe 8 richtet sich nach dem Volumen der Feststoffentleerung des Separators.

Nach einer vorgegebenen Zeit stoppt daher die Feststoffpumpe 8 und das Ventil 6 wird erneut geöffnet.

Treten unvorhergesehene Probleme auf, muss ein Teil des Feststoffes durch die Auffangschale 14 fließen, so dass die Messeinrichtung 2 anspricht. Auch wenn zwischen zwei zu vorgegebenen Zeiten durchzuführenden Entleerungen Signale auftreten, kann ein Störfall vorliegen, der an der Auffangschale 14 sensiert wird, woraufhin von einer entsprechenden Auswerteelektronik Notmaßnahmen eingeleitet werden können.

Im Störfall wird die Feststoffpumpe 8 erneut gestartet und das Ventil 6 geschlossen.

Die Messeinrichtung 2 ist im oberen Bereich des tangential in den Feststoffauffangbehälter 3 einlaufenden Behälterzulaufs 1 angeordnet. Die hier herrschenden Luftturbulenzen stellen sicher, daß keine Fehlschaltung durch Schaumbildung ausgelöst wird.

Mit der Messeinrichtung 2 können also u.a. folgende Sicherheitsfunktionen realisiert werden:
1. Entleerungsüberwachung - Die eingestellte Zeit für eine Teilentleerung ist vorbestimmbar. Beträgt sie z.B. 30 min und die Messeinrichtung 2 sensiert keine Entleerung, muss eine Störung vorliegen, welche angezeigt wird und/oder zum automatischen Stopp des Separators führt.
2. Volumenbestimmung - Sofern die Entleerung des Separators ordnungsgemäß abläuft, kann über die Messeinrichtung 2 die Dauer der Entleerung sowie die Zeit für das Leerlaufen der Auffangschale 14 und damit das Volumen der Entleerung bestimmt werden. Aus dieser Information kann wiederum geschlossen werden, ob die Entleerung beispielsweise zu klein oder zu groß war und es kann beispielsweise eine Warnung oder eine Störmeldung oder auch ein Not-Aus initiiert werden.
3. Überlaufkontrolle - Tritt während der Separierung ein unkontrollierter Überlauf oder eine Undichtigkeit am Separator auf, gelangt diese Flüssigkeit über den Feststoffänger des Separators in den Feststoffbehälter 3. Ein Teil der Flüssigkeit fließt durch die Auffangschale 14, so daß die Messeinrichtung 2 anspricht und eine Wamfunktion initiiert werden kann. Es ist auch denkbar, daß in diesem Fall die Feststoffpumpe 8 gestartet und das Ventil 6 geschlossen werden und dass das Produkt wie Milch vor den Separator z.B. zurück in eine Produktrückführung 13 oder einen Sammeltank geleitet wird. Verluste durch Produktableitungen beispielsweise in den Gully werden derart vermieden. Verluste werden dadurch vermieden.
4. Trommelkontrolle während des Separierens - Hier ist eine analoge Vorgehensweise wie unter "3" realisierbar.

### Bezugszeichen

- Behälterzulauf: 1
- Messeinrichtung: 2
- Feststoffauffangbehälter: 3
- Behälterableitung: 4
- Zweig: 5
- Ventil: 6
- Zweig: 7
- Feststoffpumpe: 8
- Pumpenableitung: 9
- Feststoffventil: 10
- Feststoffableitung: 11
- Produktventil: 12
- Produktrückführung: 13
- Auffangschale: 14
- Ablaufbohrung: 15
- Sensor: 16
- Muffe: 17
- Sensorkopf: 18
- Gully: 19

## Patentansprüche

1. Selbstentleerender Separator mit einer Feststoffauffangvorrichtung, der derart ausgestaltet ist, dass zwischen Entleerungen eine Zeit eingestellt ist, wobei die Feststoffauffangvorrichtung einen Feststoffauffangbehälter (3) aufweist, der einen an den Separator - insbesondere einen Separator zur Verarbeitung eines Milchproduktes - angeschlossenen Behälterzulauf (1) aufweist, **dadurch gekennzeichnet, daß** in dem Behälterzulauf (1) eine Meßeinrichtung (2) zur Sensierung einer den Behälterzulauf (1) durchtretenden fließfähigen Feststoffphase aus dem Separator angeordnet ist.

2. Selbstentleerender Separator mit einer Feststoffauffangvorrichtung nach Anspruch 1, **dadurch gekennzeichnet, daß** das Volumen des Feststoffauffangbehälters (3) kleiner als das 1,5fache des Volumens einer Entleerung der Separatortrommel ist.

3. Selbstentleerender Separator mit einer Feststoffauffangvorrichtung nach Anspruch 2, **dadurch gekennzeichnet, daß** das Volumen des Feststoffauffangbehälters (3) dem 0,8 - 1,2fachen Volumen einer Entleerung der Separatortrommel entspricht.

4. Selbstentleerender Separator mit einer Feststoffauffangvorrichtung nach Anspruch 3, **dadurch gekennzeichnet, daß** das Volumen des Feststoffauffangbehälters (3) dem Volumen einer Entleerung der Separatortrommel entspricht.

5. Selbstentleerender Separator mit einer Feststoffauffangvorrichtung nach einem der vorstehenden Ansprüche, **dadurch gekennzeichnet, daß** der Separator oberhalb des Feststoffauffangbehälters (3) angeordnet ist und/oder daß der Behälterzulauf (1) direkt an einen Feststoffänger angeschlossen ist.

6. Selbstentleerender Separator mit einer Feststoffauffangvorrichtung nach einem der vorstehenden Ansprüche, **dadurch gekennzeichnet, daß** der Behälterzulauf (1) in den oberen Bereich des Feststoffauffangbehälters (3) mündet.

7. Selbstentleerender Separator mit einer Feststoffauffangvorrichtung nach Anspruch 6, **dadurch gekennzeichnet, daß** der Behälterzulauf (1) in das obere Drittel des Feststoffauffangbehälters (3) mündet.

8. Selbstentleerender Separator mit einer Feststoffauffangvorrichtung nach einem der vorstehenden Ansprüche, **dadurch gekennzeichnet, daß** der Behälterzulauf (1) tangential in den Feststoffauffangbehälter (3) mündet.

9. Selbstentleerender Separator mit einer Feststoffauffangvorrichtung nach einem der vorstehenden Ansprüche, **dadurch gekennzeichnet, daß** die Höhe des Behälters mindestens dem 0,5fachen und höchstens dem 2fachen Durchmesser des Behälters entspricht.

10. Selbstentleerender Separator mit einer Feststoffauffangvorrichtung nach Anspruch 9, **dadurch gekennzeichnet, daß** der Behälterdurchmesser der Höhe des Behälters entspricht.

11. Selbstentleerender Separator mit einer Feststoffauffangvorrichtung nach einem der vorstehenden Ansprüche, **dadurch gekennzeichnet, daß** der Feststoffauffangbehälter (3) in seinem unteren Bereich, insbesondere an seiner Unterseite, eine Behälterableitung (4) aufweist.

12. Selbstentleerender Separator mit einer Feststoffauffangvorrichtung nach Anspruch 11, **dadurch gekennzeichnet, daß** die Unterseite konisch ausgebildet und die Behälterableitung (4) im Zentrum der Unterseite (4) angeordnet ist.

13. Selbstentleerender Separator mit einer Feststoffauffangvorrichtung nach einem der Ansprüche 11 oder 12, **dadurch gekennzeichnet, daß** sich die Behälterableitung (4) unterhalb des Feststoffauffangbehälters (3) t-stückartig verzweigt, wobei in dem einen Zweig (5) der Feststoffauffangbehälterableitung (4) ein Ventil (6) des Entlüftungs-/Abwasserpfades angeordnet ist, durch welches das Produkt vorzugsweise in einen Gully (19) leitbar ist.

14. Selbstentleerender Separator mit einer Feststoffauffangvorrichtung nach Anspruch 13, **dadurch gekennzeichnet, daß** im zweiten Zweig (7) der Behälterableitung (4) eine Feststoffpumpe (8) angeordnet ist.

15. Selbstentleerender Separator mit einer Feststoffauffangvorrichtung nach Anspruch 14, **dadurch gekennzeichnet, daß** der Feststoffpumpe (8) eine sich t-stückartig verzweigende Pumpenableitung (9) nachgeordnet ist.

16. Selbstentleerender Separator mit einer Feststoffauffangvorrichtung nach Anspruch 15, **dadurch gekennzeichnet, daß** die Pumpenableitung (9) einerseits über ein Feststoffventil (10) in eine Feststoffableitung (11) und andererseits über ein Produktventil (12) in den Produktzulauf (13) des Separators oder in einen weiteren Behälter vor dem Separator mündet.

17. Selbstentleerender Separator mit einer Feststoffauffangvorrichtung nach einem der vorstehenden Ansprüche, **dadurch gekennzeichnet, daß** eine Auffangschale (14) in einem sich vorzugsweise senkrecht nach unten erstreckenden Bereich des rohrartigen Behälterzulaufs (1) angeordnet ist.

18. Verfahren zum Betreiben eines selbstentleerenden Separators mit einer Feststoffauffangvorrichtung, der derart ausgestaltet ist, dass zwischen Entleerungen eine Zeit eingestellt wird, wobei die Feststoffauffangvorrichtungeinen Feststoffauffangbehälter (3) aufweist, der einen an den Separator - insbesondere einen Separator zur Verarbeitung eines Milchproduktes - angeschlossenen Behälterzulauf (1) aufweist, wobei in dem Behälterzulauf (1) eine Messeinrichtung (2) zur Sensierung einer den Behälterzulauf (1) durchtretenden fließfähigen Feststoffphase aus dem Separator angeordnet ist, **dadurch gekennzeichnet, dass** mit der im Behälterzulauf (1) der Feststoffauffangvorrichtung angeordneten Messeinrichtung (2) den Behälterzulauf (1) durchtretende fließfähige Feststoffphase aus dem Separator sensiert wird.

19. Verfahren nach Anspruch 18, **dadurch gekennzeichnet, daß** anhand der von der Messeinrichtung abgegebenen Signale die Funktion des Separators von einem Steuerungsrechner überwacht und Betriebs- oder Störfunktionen ausgelöst werden.

20. Verfahren nach einem der vorstehenden Ansprüche 18 oder 19, **dadurch gekennzeichnet, daß** die eingestellte Zeit zwischen den Entleerungen überwacht wird.

21. Verfahren nach einem der vorstehenden Ansprüche 18 bis 20, **dadurch gekennzeichnet, daß** anhand der Messeinrichtung (2) der Zeitpunkt des Beginns, die Dauer und/oder das Volumen der Entleerung bestimmt wird und dass bei Abweichungen von Sollwerten eine Warn- und/oder Störfunktion ausgelöst wird.

22. Verfahren nach Anspruch 21, **dadurch gekennzeichnet, daß** bei der Bestimmung der Dauer der Entleerung die Dauer des Leerlaufens der Messeinrichtung berücksichtigt wird.

23. Verfahren nach einem der vorstehenden Ansprüche 18 bis 22, **dadurch gekennzeichnet, daß** eine Entlüftung durch die Behälterableitung an der Unterseite des Behälters erfolgt.

24. Verfahren nach einem der vorstehenden Ansprüche 18 bis 23, **dadurch gekennzeichnet, daß** bei der Auslösung von Betriebs- oder Störfunktionen die Zeitverzögerung zwischen dem Ansprechen der Messeinrichtung und dem Erreichen des Ventils des Entlüftungs-/Abwasserpfades berücksichtigt wird.

25. Verfahren nach Anspruche 24, **dadurch gekennzeichnet, daß** eine Zeitverzögerung von weniger als 0,5 sec oder zwischen 0, 5 und 2sec, insbesondere zwischen 0,5 und 1 sec, berücksichtigt wird.

26. Verfahren nach einem der vorstehenden Ansprüche 18 bis 25, **dadurch gekennzeichnet, daß** bei einer Entleerung des Separators das Ventil des Entlüftungs-/Abwasserpfades schließt, die Feststoffpumpe (8) anläuft und das Feststoffventil (10) geöffnet wird.

27. Verfahren nach einem der vorstehenden Ansprüche 18 bis 26, **dadurch gekennzeichnet, daß** bei Störfällen - wie einem unkontrollierten Überlauf oder einem nicht gewollten Öffnen der Trommel oder einem Überlauf der Trommel - das Ventil (6) des Entlüftungs-/Abwasserpfades schließt, die Feststoffpumpe (8) gestartet, das Produktventil (12) geöffnet und das Produkt vor den Separator zurückgepumpt wird.

28. Verfahren zum Betreiben einer Feststoffauffangvorrichtung nach einem der vorstehenden Ansprüche 18 bis 27, **dadurch gekennzeichnet, daß** im störfallfreien Betrieb zwischen Entleerungen das Ventil (6) des Entlüftungs-/Abwasserpfades geöffnet ist und die Feststoffpumpe (8) stillsteht.

## Claims

1. Auto-discharging separator having a solids-collecting apparatus and configured such that a time is set between emptying operations, the solids-collecting apparatus having a solids-collecting tank (3) with a tank inflow (1) connected to the separator - in particular a separator for processing a milk product - the tank inflow (1) containing a measuring device (2) for sensing a free-flowing solid phase from the separator as it passes through the tank inflow (1).

2. Auto-discharging separator having a solids-collecting apparatus according to Claim 1, **characterized in that** the volume of the solids-collecting tank (3) is less than 1.5 times the volume emptied from the separator drum.

3. Auto-discharging separator having a solids-collecting apparatus according to Claim 2, **characterized in that** the volume of the solids-collecting tank (3) corresponds to 0.8 - 1.2 times the volume emptied from the separator drum.

4. Auto-discharging separator having a solids-collecting apparatus according to Claim 3, **characterized in that** the volume of the solids-collecting tank (3) corresponds to the volume emptied from the separator drum.

5. Auto-discharging separator having a solids-collecting apparatus according to one of the preceding claims, **characterized in that** the separator is arranged above the solids-collecting tank (3), and/or **in that** the tank inflow (1) is connected directly to a solids collector.

6. Auto-discharging separator having a solids-collecting apparatus according to one of the preceding claims, **characterized in that** the tank inflow (1) opens out into the top region of the solids-collecting tank (3).

7. Auto-discharging separator having a solids-collecting apparatus according to Claim 6, **characterized in that** the tank inflow (1) opens out into the top third of the solids-collecting tank (3).

8. Auto-discharging separator having a solids-collecting apparatus according to one of the preceding claims, **characterized in that** the tank inflow (1) opens out tangentially into the solids-collecting tank (3).

9. Auto-discharging separator having a solids-collecting apparatus according to one of the preceding claims, **characterized in that** the height of the tank corresponds at least to 0.5 times, and at most 2 times, the diameter of the tank.

10. Auto-discharging separator having a solids-collecting apparatus according to Claim 9, **characterized in that** the tank diameter corresponds to the height of the tank.

11. Auto-discharging separator having a solids-collecting apparatus according to one of the preceding claims, **characterized in that** the solids-collecting tank (3) has a tank discharge line (4) in its bottom region, in particular on its underside.

12. Auto-discharging separator having a solids-collecting apparatus according to Claim 11, **characterized in that** the underside is of conical design and the tank discharge line (4) is arranged in the centre of the underside (4).

13. Auto-discharging separator having a solids-collecting apparatus according to either of Claims 11 and 12, **characterized in that** the tank discharge line (4) branches in the manner of a t-junction beneath the solids-collecting tank (3), one branch (5) of the solids-collecting tank discharge line (4) containing a valve (6) of the venting/waste-water path, by way of which the product can be directed preferably into a gully (19).

14. Auto-discharging separator having a solids-collecting apparatus according to Claim 13, **characterized in that** the second branch (7) of the tank discharge line (4) contains a solids pump (8).

15. Auto-discharging separator having a solids-collecting apparatus according to Claim 14, **characterized in that** a pump discharge line (9) branching in the manner of a t-junction is arranged downstream of the solids pump (8).

16. Auto-discharging separator having a solids-collecting apparatus according to Claim 15, **characterized in that** the pump discharge line (9) opens out, on the one hand via a solids valve (10), into a solids discharge line (11) and, on the other hand via a product valve (12), into the product inflow (13) of the separator or into a further tank upstream of the separator.

17. Auto-discharging separator having a solids-collecting apparatus according to one of the preceding claims, **characterized in that** a collecting tray (14) is arranged in a preferably vertically downwardly extending region of the tubular tank inflow (1).

18. Method of operating an auto-discharging separator having a solids-collecting apparatus and configured such that a time is set between emptying operations, the solids-collecting apparatus having a solids-collecting tank (3) with a tank inflow (1) connected to the separator - in particular a separator for processing a milk product - the tank inflow (1) containing a measuring device (2) for sensing a free-flowing solid phase from the separator as it passes through the tank inflow (1), **characterized in that** the measuring device (2) arranged in the tank inflow (1) of the solids-collecting apparatus is used to sense the free-flowing solid phase from the separator as it passes through the tank inflow (1).

19. Method according to Claim 18, **characterized in that** the signals emitted by the measuring device are used to monitor the function of the separator by way of a control computer and to trigger operating or disturbing functions.

20. Method according to either of preceding Claims 18 and 19, **characterized by** monitoring the time set between the emptying operations.

21. Method according to one of preceding Claims 18 to 20, **characterized in that** the point in time at which the emptying operation begins, the duration of the emptying operation and/or the volume emptied are determined by way of the measuring device (2), and **in that** a warning and/or disturbing function is triggered in the event of deviations from desired values.

22. Method according to Claim 21, **characterized in that** the duration of the measuring-device idling is taken into account for determining the duration of the emptying operation.

23. Method according to one of preceding Claims 18 to 22, **characterized in that** venting takes place by way of the tank discharge line on the underside of the tank.

24. Method according to one of preceding Claims 18 to 23, **characterized in that**, in the case of operating or disturbing functions being triggered, account is taken of the time delay between the response of the measuring device and the point at which the valve of the venting/waste-water path is reached.

25. Method according to Claim 24, **characterized in that** account is taken of a time delay of less than 0.5 sec or between 0.5 and 2 sec, in particular between 0.5 and 1 sec.

26. Method according to one of preceding Claims 18 to 25, **characterized in that**, during emptying of the separator, the valve of the venting/waste-water path closes, the solids pump (8) starts up and the solids valve (10) is opened.

27. Method according to one of preceding Claims 18 to 26, **characterized in that** in the event of disturbances - such as uncontrolled overflow or undesired opening of the drum or overflow of the drum - the valve (6) of the venting/waste-water path closes, the solids pump (8) is started, the product valve (12) is opened and the product is pumped back upstream of the separator.

28. Method of operating a solids-collecting apparatus according to one of preceding Claims 18 to 27, **characterized in that**, if there is no disturbance in operation between emptying operations, the valve (6) of the venting/waste-water path is open and the solids pump (8) is at a standstill.

## Revendications

1. Séparateur à vidage automatique avec un dispositif collecteur de matières solides qui est conçu de telle manière qu'une durée est réglée entre les vidages, le dispositif collecteur de matières solides comportant un récipient collecteur de matières solides (3) qui comporte une arrivée de récipient (1) raccordée au séparateur - en particulier à un séparateur pour le traitement d'un produit laitier -, **caractérisé en ce qu'**un dispositif de mesure (2) est placé dans l'arrivée de récipient (1) pour la détection d'une phase solide fluide traversant l'arrivée de récipient (1) hors du séparateur.

2. Séparateur à vidage automatique avec un dispositif collecteur de matières solides selon la revendication 1, **caractérisé en ce que** le volume du récipient collecteur de matières solides (3) est inférieur à 1,5 fois le volume d'un vidage du tambour de séparateur.

3. Séparateur à vidage automatique avec un dispositif collecteur de matières solides selon la revendication 2, **caractérisé en ce que** le volume du récipient collecteur de matières solides (3) correspond à 0,8 - 1,2 fois le volume d'un vidage du tambour de séparateur.

4. Séparateur à vidage automatique avec un dispositif collecteur de matières solides selon la revendication 3, **caractérisé en ce que** le volume du récipient collecteur de matières solides (3) correspond au volume d'un vidage du tambour de séparateur.

5. Séparateur à vidage automatique avec un dispositif collecteur de matières solides selon l'une quelconque des revendications précédentes, **caractérisé en ce que** le séparateur est placé au-dessus du récipient collecteur de matières solides (3) et/ou **en ce que** l'arrivée de récipient (1) est raccordée directement à un collecteur de matières solides.

6. Séparateur à vidage automatique avec un dispositif collecteur de matières solides selon l'une quelconque des revendications précédentes, **caractérisé en ce que** l'arrivée de récipient (1) débouche dans la zone supérieure du récipient collecteur de matières solides (3).

7. Séparateur à vidage automatique avec un dispositif collecteur de matières solides selon la revendication 6, **caractérisé en ce que** l'arrivée de récipient (1) débouche dans le tiers supérieur du récipient collecteur de matières solides (3).

8. Séparateur à vidage automatique avec un dispositif collecteur de matières solides selon l'une quelconque des revendications précédentes, **caractérisé en ce que** l'arrivée de récipient (1) débouche tangentiellement dans le récipient collecteur de matières solides (3).

9. Séparateur à vidage automatique avec un dispositif collecteur de matières solides selon l'une quelconque des revendications précédentes, **caractérisé en ce que** la hauteur du récipient correspond au moins à 0,5 fois et au plus à 2 fois le diamètre du récipient.

10. Séparateur à vidage automatique avec un dispositif collecteur de matières solides selon la revendication 9, **caractérisé en ce que** le diamètre du récipient correspond à la hauteur du récipient.

11. Séparateur à vidage automatique avec un dispositif collecteur de matières solides selon l'une quelconque des revendications précédentes, **caractérisé en ce que** le récipient collecteur de matières solides (3) comporte un branchement de récipient (4) dans sa zone inférieure, en particulier sur sa face inférieure.

12. Séparateur à vidage automatique avec un dispositif collecteur de matières solides selon la revendication 11, **caractérisé en ce que** la face inférieure est conique et le branchement de récipient (4) est placé au centre de la face inférieure (4).

13. Séparateur à vidage automatique avec un dispositif collecteur de matières solides selon l'une quelconque des revendications 11 ou 12, **caractérisé en ce que** le branchement de récipient (4) bifurque en forme de T en dessous du récipient collecteur de matières solides (3), une vanne (6) du passage de purge/d'eaux usées étant disposée dans une branche (5) du branchement de récipient collecteur de matières solides (4), à travers laquelle le produit peut être dirigé, de préférence, dans un égout (19).

14. Séparateur à vidage automatique avec un dispositif collecteur de matières solides selon la revendication 13, **caractérisé en ce qu'**une pompe pour matières solides (8) est disposée dans la seconde branche (7) du branchement de récipient (4).

15. Séparateur à vidage automatique avec un dispositif collecteur de matières solides selon la revendication 14, **caractérisé en ce qu'**un branchement de pompe (9) bifurquant en forme de T est monté en aval de la pompe pour matières solides (8).

16. Séparateur à vidage automatique avec un dispositif collecteur de matières solides selon la revendication 15, **caractérisé en ce que** le branchement de pompe (9) débouche, d'une part, dans un branchement pour matières solides (11) par l'intermédiaire d'une vanne pour matières solides (10) et, d'autre part, dans l'arrivée de produit (13) du séparateur par l'intermédiaire d'une vanne pour produit (12) ou dans un autre récipient devant le séparateur.

17. Séparateur à vidage automatique avec un dispositif collecteur de matières solides selon l'une quelconque des revendications précédentes, **caractérisé en ce qu'**une cuvette collectrice (14) est disposée dans une zone de l'arrivée de récipient tubulaire (1) s'étendant, de préférence, perpendiculairement vers le bas.

18. Procédé pour faire fonctionner un séparateur à vidage automatique avec un dispositif collecteur de matières solides qui est conçu de telle manière qu'une durée est réglée entre les vidages, le dispositif collecteur de matières solides comportant un récipient collecteur de matières solides (3) qui comporte une arrivée de récipient (1) raccordée au séparateur - en particulier à un séparateur pour le traitement d'un produit laitier -, un dispositif de mesure (2) étant placé dans l'arrivée de récipient (1) pour la détection d'une phase solide fluide traversant l'arrivée de récipient (1) hors du séparateur, **caractérisé en ce qu'**une phase solide fluide traversant l'arrivée de récipient (1) hors du séparateur est détectée avec le dispositif de mesure (2) placé dans l'arrivée de récipient (1) du dispositif collecteur de matières solides.

19. Procédé selon la revendication 18, **caractérisé en ce que** le fonctionnement du séparateur est contrôlé par un ordinateur de commande et les fonctions de marche ou de panne sont déclenchées à l'aide de signaux émis par le dispositif de mesure.

20. Procédé selon l'une quelconque des revendications 18 ou 19, **caractérisé en ce que** la durée réglée entre les vidages est contrôlée.

21. Procédé selon l'une quelconque des revendications 18 à 20, **caractérisé en ce que** l'instant du démarrage, la durée et/ou le volume du vidage est déterminé à l'aide du dispositif de mesure (2) et **en ce que**, en cas d'écarts par rapport à des valeurs de consigne, une fonction d'avertissement et/ou de panne est déclenchée.

22. Procédé selon la revendication 21, **caractérisé en ce que** la durée de la marche à vide du dispositif de mesure est prise en compte pour la détermination de la durée de vidage.

23. Procédé selon l'une quelconque des revendications 18 à 22, **caractérisé en ce qu'**une purge est réalisée au moyen du branchement de récipient sur la face inférieure du récipient.

24. Procédé selon l'une quelconque des revendications 18 à 23, **caractérisé en ce que**, lors du déclenchement des fonctions d'avertissement ou de panne, la temporisation entre la réaction du dispositif de mesure et l'arrivée à la vanne du passage de purge/d'eaux usées est prise en compte.

25. Procédé selon la revendication 24, **caractérisé en ce qu'**une temporisation inférieure à 0,5 seconde ou entre 0,5 et 2 secondes, en particulier entre 0,5 et 1 seconde, est prise en compte.

26. Procédé selon l'une quelconque des revendications 18 à 25, **caractérisé en ce que**, lors d'un vidage du séparateur, la vanne du passage de purge/d'eaux usées se ferme, la pompe pour matières solides (8) démarre et la vanne pour matières solides (10) s'ouvre.

27. Procédé selon l'une quelconque des revendications 18 à 26, **caractérisé en ce que**, en cas de panne - comme par exemple, un débordement incontrôlé ou une ouverture involontaire du tambour ou un débordement du tambour -, la vanne (6) du passage de purge/d'eaux usées se ferme, la pompe pour matières solides (8) démarre, la vanne pour produit (12) s'ouvre et le produit est recyclé par pompage devant le séparateur.

28. Procédé pour faire fonctionner un dispositif collecteur de matières solides selon l'une quelconque des revendications 18 à 27, **caractérisé en ce que**, en cas de fonctionnement sans panne entre les vidages, la vanne (6) du passage de purge/d'eaux usées est ouverte et la pompe pour matières solides (8) est arrêtée.
